(19) **Europäisches Patentamt / European Patent Office / Office européen des brevets**

(11) **EP 2 573 974 B1**

(12) # EUROPEAN PATENT SPECIFICATION

(45) Date of publication and mention
of the grant of the patent:
**09.05.2018 Bulletin 2018/19**

(51) Int Cl.:
***H04J 3/06*** (2006.01)

(21) Application number: **11782890.5**

(22) Date of filing: **28.03.2011**

(86) International application number:
**PCT/CN2011/072214**

(87) International publication number:
**WO 2011/143973 (24.11.2011 Gazette 2011/47)**

(54) **METHOD AND APPARATUS FOR PERFORMING CLOCK SYNCHRONIZATION AMONG DEVICES**

VERFAHREN UND VORRICHTUNG ZUR DURCHFÜHRUNG EINER TAKTSYNCHRONISATION ZWISCHEN GERÄTEN

PROCÉDÉ ET APPAREIL DE RÉALISATION DE SYNCHRONISATION D'HORLOGE ENTRE DISPOSITIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2010 CN 201010176495**

(43) Date of publication of application:
**27.03.2013 Bulletin 2013/13**

(73) Proprietor: **ZTE Corporation**
**Shenzhen, Guangdong 518057 (CN)**

(72) Inventor: **LI, Xilong**
**Shenzhen**
**Guangdong 518057 (CN)**

(74) Representative: **Awapatent AB**
**P.O. Box 11394**
**404 28 Göteborg (SE)**

(56) References cited:
EP-B1- 1 209 850           CN-A- 101 047 491
CN-A- 101 227 246          CN-A- 101 425 865
CN-A- 101 425 891          CN-A- 101 848 051
US-A1- 2006 029 016

- ZHOU RONG ET AL.: 'Study and Application for Adjusting Time on 1-8 Measurement and Control Network' MEASUREMENT & CONTROL TECHNOLOGY. vol. 25, no. 8, August 2006, pages 44 - 46, XP008168956
- LUCA DE VITO ET AL.: 'One-Way Delay Measurement: State of the Art' IEEE 1-8 TRANSACTIONS ON INSTRUMENTATION AND MEASUREMENT. vol. 57, no. 12, December 2008, pages 2742 - 2750, XP011321105

**Description**

**TECHNICAL FIELD**

The disclosure relates to the technical field of network communications, in particular to a method and apparatus for performing clock synchronization among devices.

**BACKGROUND**

The Connectivity Fault Management (CFM) function may be used to perform examination, isolation and make a connectivity fault report on virtual bridged local area networks effectively; in the CFM, one important function is an Ethernet Delay Measurement (ETH-DM) function. In Y.1731 protocol, ETH-DM includes Two-way network delay measurement (TWO-DM) and One-way frame Delay Measurement (ONE-DM), which is convenient for a manager to measure and calculate a delay between certain two points and a jitter of a data link according to an actual demand during network management.

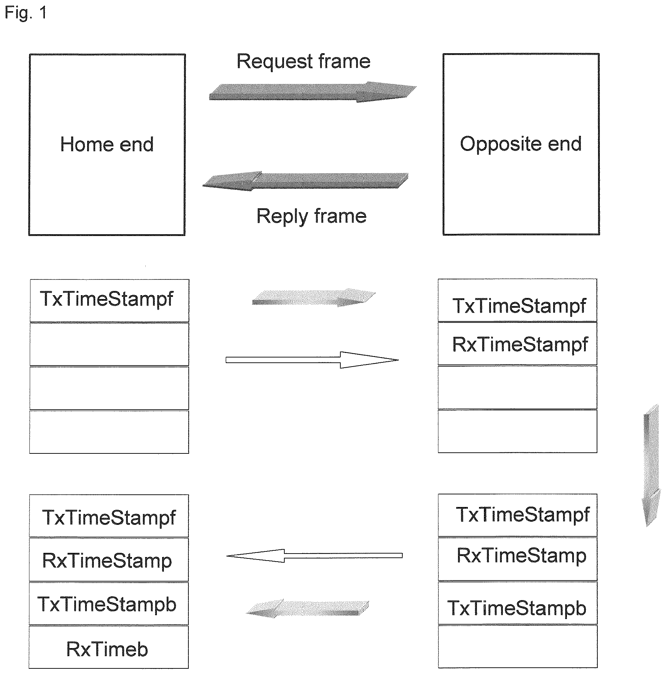

TWO-DM is completed by transmitting regular ETH-DM frames to a peer Maintenance End Point (MEP) and receiving response information frames with ETH-DM from the peer MEP within a diagnostic interval. When one MEP generates a frame with ETH-DM information, the MEP expects to receive a response frame with ETH-DM information from the peer MEP. When TWO-DM is used, one accurate delay value can be calculated even if clocks between two apparatuses are not synchronous. The TWO-DM process is as shown in Fig. 1, a home MEP transmits one frame with ETH-DM request information, with the frame including TxTimeStampf, and an opposite MEP responds one frame with ETH-DM reply information, with the reply frame including the TxTimeStampf copied from the ETH-DM request information and time stamp information indicating the time when the opposite MEP receives and transmits a frame. The home MEP receives the frame with ETH-DM reply information, and calculates a frame delay according to the included four time stamps according to the formula as follows:

$$\text{Dual-Delay} = (\text{RxTimeb} - \text{TxTimeStampf}) - (\text{TxTimeStampb} - \text{RxTimeStampf})$$

where, Dual-Delay represents a two-way frame delay, RxTimeb represents a time stamp when the home end receives a response message, TxTimeStampf represents a time stamp when the home end transmits a message, TxTimeStampb represents a time stamp when the opposite end transmits a response message, RxTimeStampf represents a time stamp when the opposite end receives a message from the home end.

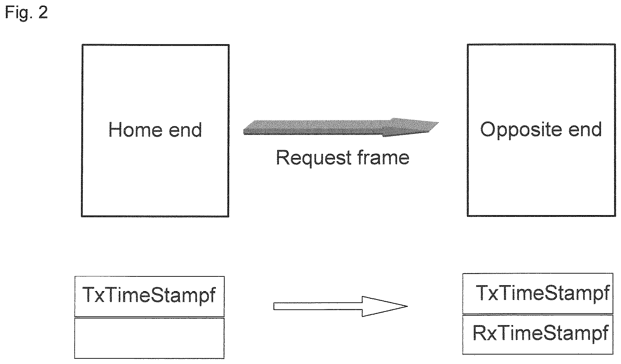

The ONE-DM process is as shown in Fig. 2, the measurement of a one-way frame delay is calculated by a difference value between the time when the opposite end receives a message and the time when the home end transmits the message, which requires clock synchronization between the home MEP and the opposite MEP.

However, the measurement result of a one-way frame delay requires high accuracy up to nanosecond scale, while existing methods of performing clock synchronization between two apparatuses by a network time protocol have an accuracy only up to second scale, not meeting requirements, so that it is difficult to use the ONE-DM function in application. Application EP 1 209 850 discloses a method for synchronizing two network elements exchanging request and response messages and comparing the mean of the round trip delay with a threshold.

**SUMMARY**

The problem to be solved in the disclosure is to provide a method and apparatus for performing clock synchronization among devices, to overcome the defect of low accuracy of clock synchronization among devices in a related art.

To achieve the above purpose, the technical solution of the disclosure provides a method for performing clock synchronization among devices, the method includes the following steps: A: performing coarse synchronization between clocks of both a home end and an opposite end by using a network time protocol, with high accuracy of the coarse synchronization up to second scale; B: initiating, by the home end, a two-way network delay measurement, and obtaining time when the opposite end transmits a response message, time when the home end receives a response message and a two-way frame delay, and using half of the two-way frame delay as a one-way frame delay; C: repeating the step B for predetermined times, and obtaining an average value of the time when the opposite end transmits a response message, an average value of the time when the home end receives a response message and an average one-way frame delay according to multiple obtained time when the opposite end transmits a response message, multiple obtained time when the home end receives a response message and multiple obtained one-way frame delays; D: subtracting the average value of the time when the home end receives a response message from the sum of the average value of the time when the opposite end transmits a response message and the average one-way frame delay, to obtain a time correction value; and E: obtaining local current time and correcting the local current time according to the time correction value by the home end.

Further, the step B may include: B1: transmitting, by the home end, a message to the opposite end, with the message including the time when the home end transmits the message; B2: returning, by the opposite end, a response message to the home end, with the response message including the time when the home end transmits the message, time when the opposite end receives the message from the home end and time when the opposite end transmits the response message; B3: receiving, by the home end, the response message, calculating the two-way frame delay according to a formula as follows: Dual-Delay = (RxTimeb - TxTimeStampf) - (TxTimeStampb - RxTimeStampf), where, the Dual-Delay represents the two-way frame delay, the RxTimeb represents the time when the home end receives a response message, the TxTimeStampf represents the time when the home end transmits a message, the TxTimeStampb represents the time when the opposite end transmits a response message, and the RxTimeStampf represents the time when the opposite end receives a message from the home end; and B4: calculating the one-way frame delay according to a formula as follows: Single-Delay = Dual-Delay $\div$ 2, where, the Single-Delay represents the one-way frame delay, and the Dual-Delay represents the two-way frame delay.

Further, the step C may include: C1: repeating the step B for n-1 times and performing two-way network delay measurements for total n times, where, the n represents the predetermined times; and C2: calculating the average value of the time when the opposite end transmits a response message according to a formula as follows: $\text{TxTimeStampb}_{aver}$ = $(\text{TxTimeStampb}_1 + \text{TxTimeStampb}_2 + \text{TxTimeStampb}_n) \div n$, where, the $\text{TxTimeStampb}_{aver}$ represents the average value of the time when the opposite end transmits a response message, and the $\text{TxTimeStampb}_1,...\text{TxTimeStampb}_n$ represents each obtained time when the opposite end transmits a response message; calculating the average value of the time when the home end receives a response message according to a formula as follows: $\text{RxTimeb}_{aver} = (\text{RxTimeb}_1 + \text{RxTimeb}_2 + ... \text{RxTimeb}_n) \div n$, where, the $\text{RxTimeb}_{aver}$ represents the average value of the time when the home end receives a response message, and the $\text{RxTimeb}_1,...\text{RxTimeb}_n$ represents each obtained time when the home end receives a response message; and calculating the average one-way frame delay according to a formula as follows: $\text{Delay}_{aver} = (\text{Single-Delayi} + \text{Single-Delay}_2 + ...\text{Single-Delay}_n) \div n$, where, the $\text{Delay}_{aver}$ represents the average one-way frame delay, and the $\text{Single-Delay}_1,...\text{Single-Delay}_n$ represents each obtained one-way frame delay.

Further, the step D may include: calculating the time correction value according to a formula as follows: Minus = $\text{RxTimeb}_{aver}$ - ($\text{TxTimeStampb}_{aver}$ + $\text{Delay}_{aver}$), where, the Minus represents the time correction value, the RxTimebaver represents the average value of the time when the home end receives a response message, the $\text{TxTimeStampb}_{aver}$ represents the average value of the time when the opposite end transmits a response message, and the $\text{Delay}_{aver}$ represents the average one-way frame delay.

Further, the step E may include: E1: obtaining the local current time T by the home end; and E2: correcting the local current time according to a formula as follows: Ts = T - Minus, where, the $T_S$ represents local current time after correction, the T represents the local current time before correction, and the Minus represents the time correction value.

Further, after the step E, the method may include: initiating a two-way network delay measurement at the opposite end, repeating the steps B to E, and correcting local current time of the opposite end.

Further, after correcting the local current time of the home end and/or opposite end, the method may include a step of initiating a one-way network delay measurement by the home end to obtain a one-way frame delay, and the step specifically includes: transmitting a message by the home end to the opposite end, with the message including time when the home end transmits the message; and receiving, by the opposite end, the message and subtracting the time when the home end transmits the message from the time when the opposite end receives the message to obtain the one-way frame delay.

The technical solution of the disclosure also provides an apparatus for performing clock synchronization among devices, including: a coarse synchronization unit, configured to perform coarse synchronization between clocks of both a home end and an opposite end by using a network time protocol, with high accuracy of the coarse synchronization up to second scale; a two-way network delay measurement unit, configured for the home end to initiate a two-way network delay measurement, and obtain time when the opposite end transmits a response message, time when the home end receives a response message and a two-way frame delay, and use half of the two-way frame delay as a one-way frame delay; an average value obtaining unit, configured to obtain an average value of the time when the opposite end transmits a response message, an average value of the time when the home end receives a response message and an average one-way frame delay according to multiple obtained time when the opposite end transmits a response message, multiple obtained time when the home end receives a response message and multiple obtained one-way frame delays; a time correction value obtaining unit, configured to subtract the average value of the time when the home end receives a response message from the sum of the average value of the time when the opposite end transmits a response message and the average one-way frame delay, to obtain a time correction value; and a correction unit, configured for the home end to obtain local current time and correct the local current time according to the time correction value.

Further, the apparatus may include: a one-way network delay measurement unit, configured to for the home end to initiate a one-way network delay measurement to obtain the one-way frame delay, after local current time of the home end and/or opposite end is corrected.

Compared with a related art, the disclosure has the following beneficial effects:

in the disclosure, clock synchronization among devices is realized with high accuracy up to nanosecond scale by calculating the delay among devices for multiple times by employing the TWO-DM function, obtaining an average one-way frame delay among devices, and correcting local current time with local current time of the devices and the average one-way frame delay.

## BRIEF DESCRIPTION OF THE DRAWINGS

Fig. 1 shows a flowchart of TWO-DM in a related art;

Fig. 2 shows a flowchart of ONE-DM in a related art;

Fig. 3 shows a flowchart of a method for performing clock synchronization among devices according to an embodiment of the disclosure; and

Fig. 4 shows a structure diagram of an apparatus for performing clock synchronization among devices according to an embodiment of the disclosure.

## DETAILED DESCRIPTION

Hereinafter, the specific implementation of the disclosure will be further described in details in combination with drawings and embodiments. The following embodiments are used for describing the disclosure, but not for limiting the scope of the disclosure.

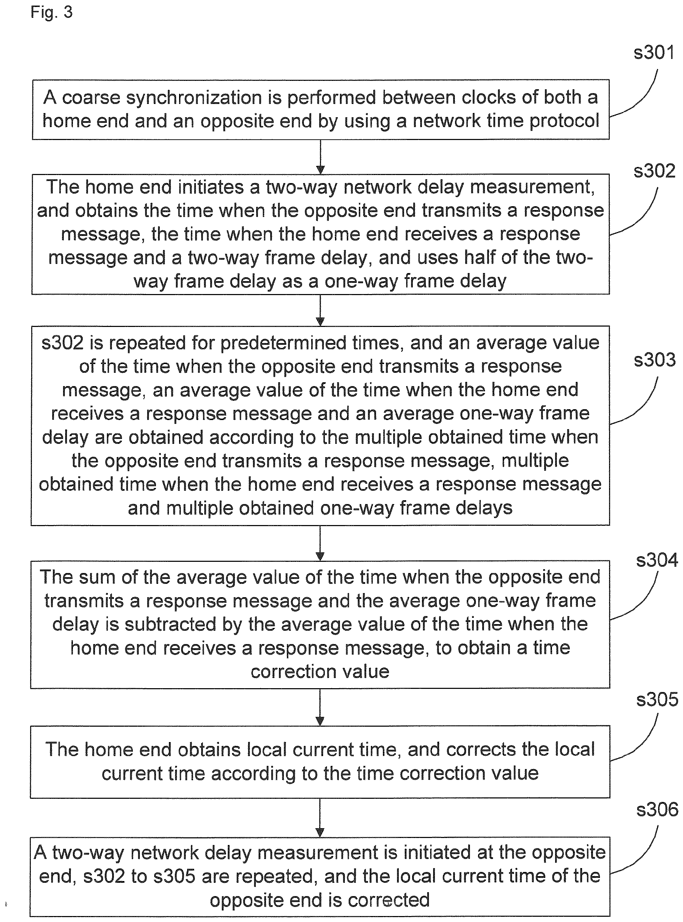

A flow of a method for performing clock synchronization among devices according to an embodiment of the disclosure is shown in Fig. 3, including the following steps:

step s301: coarse synchronization is performed between clocks of both a home end and an opposite end by using a network time protocol, with high accuracy of the coarse synchronization up to second scale;

step s302: the home end initiates a two-way network delay measurement, and obtains time when the opposite end transmits a response message, time when the home end receives a response message and a two-way frame delay, and uses half of the two-way frame delay as a one-way frame delay; this step specifically includes the following steps:

step s3021: the home end transmits a message to the opposite end, with the message including TxTimeStampf representing the time when the home end transmits a message; in the embodiment, it is assumed that TxTimeStampf is 17h 10min 5s 20ns;

step s3022: the opposite end returns a response message to the home end, with the response message including TxTimeStampf representing the time when the home end transmits a message, RxTimeStampf representing the time when the opposite end receives the message from the home end and TxTimeStampb representing the time when the opposite end transmits the response message; in the embodiment, it is assumed that RxTimeStampf is 17h 10min 15s 500060ns, TxTimeStampb is 17h 10min 17s 500080ns;

step s3023: the home end receives the response message, in the embodiment, it is assumed that RxTimeb representing the time when the home end receives a response message is 17h 10min 27s 60ns, and calculates the two-way frame delay Dual-Delay according to a formula as follows: Dual-Delay = (RxTimeb - TxTimeStampf) - (TxTimeStampb - RxTimeStampf); in the embodiment, by calculation, Dual-Delay is 20s 20ns; and

step s3024: the one-way frame delay Single-Delay is calculated according to a formula as follows: Single-Delay = Dual-Delay ÷ 2, and by calculation, the Single-Delay is 10s 10ns;

step s303: the step s302 is repeated for predetermined times, and an average value of the time when the opposite end transmits a response message, an average value of the time when the home end receives a response message and an average one-way frame delay are obtained according to multiple obtained time when the opposite end transmits a response message, multiple obtained time when the home end receives a response message and multiple obtained one-way frame delays; this step specifically includes the following steps:

step s3031: the step s302 is repeated for n-1 times and two-way network delay measurements are performed for total n times, where, n represents the predetermined times; in the embodiment, it is assumed that n is 20;

step s3032: the average value of the time when the opposite end transmits a response message is calculated according to a formula as follows: $TxTimeStampb_{aver} = (TxTimeStampb_1 + TxTimeStampb_2 + ... TxTimeStampb_n) \div n$, where, $TxTimeStampb_{aver}$ represents the average value of the time when the opposite end transmits a response message, and $TxTimeStampb_1,... TxTimeStampb_n$ represents each obtained time when the opposite end transmits a response message; in the embodiment, it is assumed that, by calculation, the $TxTimeStampb_{aver}$ is 17h 10min 17s 500080ns;

the average value of the time when the home end receives a response message is calculated according to a formula as follows: $RxTimeb_{aver} = (RxTimeb_1 + RxTimeb_2 + ... RxTimeb_n) \div n$, where, $RxTimeb_{aver}$ represents the average value of the time when the home end receives a response message, and $RxTimeb_1,...RxTimeb_n$ represents each obtained time when the home end receives a response message; in the embodiment, it is assumed that, by calculation, the $RxTimeb_{aver}$ is 17h 10min 27s 60ns;

the average one-way frame delay is calculated according to a formula as follows: $Delay_{aver} = (Single\_Delay_1 + Single\text{-}Delay_2 + ...Single\text{-}Delay_n) \div n$, where, $Delay_{aver}$ represents the average one-way frame delay, and $Single\text{-}Delay_1,...Single\text{-}Delay_n$ represents the one-way frame delay obtained each time; in the embodiment, it is assumed that, by calculation, $Delay_{aver}$ is 10s 10ns;

step s304: The sum of the average value of the time when the opposite end transmits a response message and the average one-way frame delay is subtracted by the average value of the time when the home end receives a response message, to obtain a time correction value; in the embodiment, the time correction value Minus is calculated according to a formula as follows: $Minus = RxTimeb_{aver} - (TxTimeStampb_{aver} + Delay_{aver})$, in the embodiment, by calculation, Minus is -500030ns;

step s305: the home end obtains local current time, and corrects the local current time according to the time correction value; this step specifically includes the following steps:

s3051: the home end obtains the local current time T; in the embodiment, it is assumed that T is 17h 10min 28s 30ns;

s3052: the local current time is corrected according to a formula as follows: $Ts = T - Minus$, where, $T_S$ represents the local current time after correction, T represents the local current time before correction, Minus represents the time correction value; in the embodiment, by calculation, $T_S$ is 17h 10min 28s 500060ns;

and step s306: a two-way network delay measurement is initiated at the opposite end, the steps s302 to s305 are repeated, and the local current time of the opposite end is corrected.

By the above correction process, the clock synchronization between the home end and the opposite end is realized. In order to reduce an error, the stability of the network environment is kept as far as possible during the correction process.

After clock synchronization between the home end and the opposite end is realized by the above process, the accuracy reaches nanosecond scale, which can meet the accuracy of the measurement requirements of one-way frame delay in the Y.1731 protocol, therefore, the ONE-DM function can be used in the application. The specific process is as follows: first, a home end transmits a message to an opposite end, with the message including TxTimeStampf representing the time when the home end transmits a message; then, the opposite end receives the message, and subtracts TxTimeStampf representing the time when the home end transmits the message from RxTimef representing the time when the opposite end receives the message, to obtain the one-way frame delay.

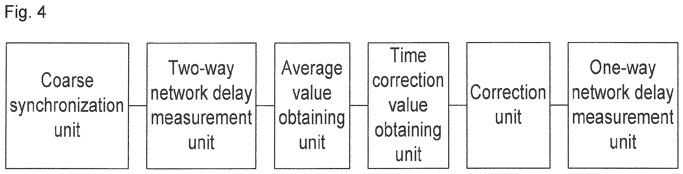

The apparatus for performing clock synchronization among devices according to an embodiment of the disclosure is shown in Fig. 4, including: a coarse synchronization unit, a two-way network delay measurement unit, an average value obtaining unit, a time correction value obtaining unit, a correction unit and a one-way network delay measurement unit; wherein the two-way network delay measurement unit is connected with the coarse synchronization unit and the average value obtaining unit, respectively; the time correction value obtaining unit is connected with the average value obtaining unit and the correction unit, respectively; and the correction unit is connected with the one-way network delay measurement unit.

The coarse synchronization unit is configured to perform coarse synchronization between clocks of both a home end and an opposite end by using a network time protocol, with high accuracy of the coarse synchronization up to second scale; the two-way network delay measurement unit is configured for the home end to initiate a two-way network delay measurement, and obtain time when the opposite end transmits a response message, time when the home end receives a response message and a two-way frame delay, and use half of the two-way frame delay as a one-way frame delay; the average value obtaining unit is configured to obtain an average value of the time when the opposite end transmits a response message, an average value of the time when the home end receives a response message and an average one-way frame delay according to multiple obtained time when the opposite end transmits a response message, multiple obtained time when the home end receives a response message and multiple obtained one-way frame delays; the time correction value obtaining unit is configured to subtract the average value of the time when the home end receives a response message from the sum of the average value of the time when the opposite end transmits a response message and the average one-way frame delay, to obtain a time correction value; the correction unit is configured for the home end to obtain local current time and correct the local current time according to the time correction value; and the one-way network delay measurement unit is configure for the home end to initiate a one-way network delay measurement to obtain the one-way frame delay, after the local current time of the home end and/or opposite end is corrected.

In the disclosure, clock synchronization among devices is realized with high accuracy up to nanosecond scale by calculating the delay among devices for multiple times by the TWO-DM function of the Y.1731 protocol, obtaining an average one-way frame delay among devices, and correcting local current time by using local current time of the devices and the average one-way frame delay.

The above descriptions are only preferred implementation ways of the disclosure, it should be noted that, for ordinary persons skilled in the technical field, various improvements and embellishments may be made within the technical principles of the disclosure, and these improvements and embellishments should be regarded to be included within the protection scope of the disclosure, for example, the coarse clock synchronization process may be omitted, instead, the local clock may be corrected directly by TWO-DM, so that the purpose of using ONE-DM is realized.

## Claims

1. A method for performing clock synchronization among devices, comprising the following steps:

   A: performing coarse synchronization between clocks of both a home end and an opposite end by using a network time protocol, with high accuracy of the coarse synchronization up to second scale;
   B: initiating, by the home end, a two-way network delay measurement, and obtaining time when the opposite end transmits a response message, time when the home end receives a response message and a two-way frame delay, and using half of the two-way frame delay as a one-way frame delay;
   C: repeating the step B for predetermined times, and obtaining an average value of the time when the opposite end transmits a response message, an average value of the time when the home end receives a response message and an average one-way frame delay according to multiple obtained time when the opposite end transmits a response message, multiple obtained time when the home end receives a response message and multiple obtained one-way frame delays;
   D: subtracting the average value of the time when the home end receives a response message from the sum of the average value of the time when the opposite end transmits a response message and the average one-way frame delay, to obtain a time correction value; and
   E: obtaining local current time and correcting the local current time according to the time correction value by the home end.

2. The method for performing clock synchronization among devices according to claim 1, wherein step B comprises:

   B1: transmitting, by the home end, a message to the opposite end, with the message including time when the home end transmits the message;
   B2: returning, by the opposite end, a response message to the home end, with the response message including the time when the home end transmits the message, time when the opposite end receives the message from the home end and time when the opposite end transmits the response message;
   B3: receiving, by the home end, the response message, calculating the two-way frame delay according to a formula as follows: Dual-Delay = (RxTimeb - TxTimeStampf) - (TxTimeStampb - RxTimeStampf), where, the Dual-Delay represents the two-way frame delay, the RxTimeb represents the time when the home end receives a response message, the TxTimeStampf represents the time when the home end transmits a message, the TxTimeStampb represents the time when the opposite end transmits a response message, and the RxTimeStampf represents the time when the opposite end receives a message from the home end; and

B4: calculating the one-way frame delay according to a formula as follows: Single-Delay = Dual-Delay ÷ 2, where, the Single-Delay represents the one-way frame delay, and the Dual-Delay represents the two-way frame delay.

3. The method for performing clock synchronization among devices according to claim 2, wherein the step C comprises:

C1: repeating the step B for n-1 times and performing two-way network delay measurements for total n times, where, the n represents the predetermined times; and

C2: calculating the average value of the time when the opposite end transmits a response message according to a formula as follows: $TxTimeStampb_{aver} = (TxTimeStampb_1 + TxTimeStampb_2 + TxTimeStampb_n) \div n$, where, the $TxTimeStampb_{aver}$ represents the average value of the time when the opposite end transmits a response message, and the $TxTimeStampb_1, ... TxTimeStampb_n$ represents each obtained time when the opposite end transmits a response message;

calculating the average value of the time when the home end receives a response message according to a formula as follows: $RxTimeb_{aver} = (RxTimeb_1 + RxTimeb_2 + ... RxTimeb_n) \div n$, where, the $RxTimeb_{aver}$ represents the average value of the time when the home end receives a response message, and the $RxTimeb_1, ... RxTimeb_n$ represents each obtained time when the home end receives a response message; and

calculating the average one-way frame delay according to a formula as follows: $Delay_{aver} = (Single\text{-}Delayi + Single\text{-}Delay_2 + ...Single\text{-}Delay_n) \div n$, where, the $Delay_{aver}$ represents the average one-way frame delay, and the Single-Delayi, ... $Single\text{-}Delay_n$ represents each obtained one-way frame delay.

4. The method for performing clock synchronization among devices according to claim 3, wherein the step D comprises:

calculating the time correction value according to a formula as follows: $Minus = RxTimeb_{aver} - (TxTimeStampb_{aver} + Delay_{aver})$, where, the Minus represents the time correction value, the RxTimebaver represents the average value of the time when the home end receives a response message, the $TxTimeStampb_{aver}$ represents the average value of the time when the opposite end transmits a response message, and the $Delay_{aver}$ represents the average one-way frame delay.

5. The method for performing clock synchronization among devices according to claim 4, wherein the step E comprises:

E1: obtaining the local current time T by the home end; and

E2: correcting the local current time according to a formula as follows: Ts = T - Minus, where, the $T_S$ represents local current time after correction, the T represents the local current time before correction, and the Minus represents the time correction value.

6. The method for performing clock synchronization among devices according to claim 1, further comprising: after the step E, initiating a two-way network delay measurement at the opposite end, repeating the steps B to E, and correcting local current time of the opposite end.

7. The method for performing clock synchronization among devices according to any one of claims 1 to 6, further comprising a step of initiating a one-way network delay measurement by the home end to obtain a one-way frame delay, after local current time of the home end and/or the opposite end is corrected, and the step comprising:

transmitting, by the home end, a message to the opposite end, with the message including time when the home end transmits the message; and

receiving, by the opposite end, the message, and subtracting the time when the home end transmits the message from time when the opposite end receives the message to obtain the one-way frame delay.

8. An apparatus for performing clock synchronization among devices, comprising:

a coarse synchronization unit, configured to perform coarse synchronization between clocks of both a home end and an opposite end by using a network time protocol, with high accuracy of the coarse synchronization up to second scale;

a two-way network delay measurement unit, configured for the home end to initiate a two-way network delay measurement, and obtain time when the opposite end transmits a response message, time when the home end receives a response message and a two-way frame delay, and use half of the two-way frame delay as a one-way frame delay;

an average value obtaining unit, configured to obtain an average value of the time when the opposite end transmits a response message, an average value of the time when the home end receives a response message and an average one-way frame delay according to multiple obtained time when the opposite end transmits a response message, multiple obtained time when the home end receives a response message and multiple obtained one-way frame delays;

a time correction value obtaining unit, configured to subtract the average value of the time when the home end receives a response message from the sum of the average value of the time when the opposite end transmits a response message and the average one-way frame delay, to obtain a time correction value; and

a correction unit, configured for the home end to obtain local current time and correct the local current time according to the time correction value.

**9.** The apparatus for performing clock synchronization among devices according to claim 8, further comprising:
a one-way network delay measurement unit, configured for the home end to initiate a one-way network delay measurement to obtain the one-way frame delay, after local current time of the home end and/or the opposite end is corrected.

## Patentansprüche

**1.** Verfahren zum Ausführen einer Taktsynchronisation zwischen Vorrichtungen, das die folgenden Schritte umfasst:

A: Ausführen einer Grobsynchronisation zwischen Takten sowohl eines Heimat-Endes als auch eines entgegengesetzten Endes unter Verwendung eines Netzwerkzeitprotokolls, mit hoher Genauigkeit der Grobsynchronisation bis in den Sekundenbereich;

B: Initiieren, durch das Heimat-Ende, einer Zweiweg-Netzwerkverzögerungsmessung und Erhalten einer Zeit, wann das entgegengesetzte Ende eine Antwortnachricht sendet, einer Zeit, wann das Heimat-Ende eine Antwortnachricht empfängt, und einer Zweiweg-Frameverzögerung, und Verwenden der Hälfte der Zweiweg-Frameverzögerung als eine Einweg-Frameverzögerung;

C: Wiederholen von Schritt B eine zuvor festgelegte Anzahl von Malen, und Erhalten eines Durchschnittswertes der Zeit, wann das entgegengesetzte Ende eine Antwortnachricht sendet, eines Durchschnittswertes der Zeit, wann das Heimat-Ende eine Antwortnachricht empfängt, und einer durchschnittlichen Einweg-Frameverzögerung gemäß mehreren erhaltenen Zeiten, wann das entgegengesetzte Ende eine Antwortnachricht sendet, mehreren erhaltenen Zeiten, wann das Heimat-Ende eine Antwortnachricht empfängt, und mehreren erhaltenen Einweg-Frameverzögerungen;

D: Subtrahieren des Durchschnittswertes der Zeit, wann das Heimat-Ende eine Antwortnachricht empfängt, von der Summe des Durchschnittswertes der Zeit, wann das entgegengesetzte Ende eine Antwortnachricht sendet, und der durchschnittlichen Einweg-Frameverzögerung, um einen Zeitkorrekturwert zu erhalten; und

E: Erhalten einer aktuellen Ortszeit und Korrigieren der aktuellen Ortszeit gemäß dem Zeitkorrekturwert durch das Heimat-Ende.

**2.** Verfahren zum Ausführen einer Taktsynchronisation zwischen Vorrichtungen nach Anspruch 1, wobei Schritt B Folgendes umfasst:

B1: Senden, durch das Heimat-Ende, einer Nachricht an das entgegengesetzte Ende, wobei die Nachricht eine Zeit enthält, wann das Heimat-Ende die Nachricht sendet;

B2: Zurücksenden, durch das entgegengesetzte Ende, einer Antwortnachricht an das Heimat-Ende, wobei die Antwortnachricht die Zeit enthält, wann das Heimat-Ende die Nachricht sendet, die Zeit, wann das entgegengesetzte Ende die Nachricht von dem Heimat-Ende empfängt, und die Zeit, wann das entgegengesetzte Ende die Antwortnachricht sendet;

B3: Empfangen, durch das Heimat-Ende, der Antwortnachricht, Berechnen der Zweiweg-Frameverzögerung gemäß folgender Formel: Dual-Delay = (RxTimeb -TxTimeStampf) - (TxTimeStampb - RxTimeStampf), wobei Dual-Delay die Zweiweg-Frameverzögerung darstellt, RxTimeb die Zeit darstellt, wann das Heimat-Ende eine Antwortnachricht empfängt, TxTimeStampf die Zeit darstellt, wann das Heimat-Ende eine Nachricht sendet, TxTimeStampb die Zeit darstellt, wann das entgegengesetzte Ende eine Antwortnachricht sendet, und RxTimeStampf die Zeit darstellt, wann das entgegengesetzte Ende eine Nachricht von dem Heimat-Ende empfängt; und

B4: Berechnen der Einweg-Frameverzögerung gemäß folgender Formel: Single-Delay = Dual-Delay ÷ 2, wobei Single-Delay die Einweg-Frameverzögerung darstellt und Dual-Delay die Zweiweg-Frameverzögerung darstellt.

3. Verfahren zum Ausführen einer Taktsynchronisation zwischen Vorrichtungen nach Anspruch 2, wobei der Schritt C Folgendes umfasst:

C1: Wiederholen von Schritt B n-1 Male und Ausführen von Zweiweg-Netzwerkverzögerungsmessungen insgesamt n Male, wobei n die zuvor festgelegten Zeiten darstellt; und

C2: Berechnen des Durchschnittswertes der Zeit, wann das entgegengesetzte Ende eine Antwortnachricht sendet, gemäß folgender Formel: $TxTimeStampb_{aver} = (TxTimeStampb_1 + TxTimeStampb_2 + TxTimeStampb_n)$ ÷ n, wobei $TxTimeStampb_{aver}$ den Durchschnittswert der Zeit darstellt, wann das entgegengesetzte Ende eine Antwortnachricht sendet, und $TxTimeStampb_1$, ..., $TxTimeStampb_n$ jede erhaltene Zeit darstellt, wann das entgegengesetzte Ende eine Antwortnachricht sendet;

Berechnen des Durchschnittswertes der Zeit, wann das Heimat-Ende eine Antwortnachricht empfängt, gemäß folgender Formel: $RxTimeb_{aver} = (RxTimeb_1 + RxTimeb_2 + ... RxTimeb_n)$ ÷ n, wobei $RxTimeb_{aver}$ den Durchschnittswert der Zeit darstellt, wann das Heimat-Ende eine Antwortnachricht empfängt, und $RxTimeb_1$, ..., $RxTimeb_n$ jede erhaltene Zeit darstellt, wann das Heimat-Ende eine Antwortnachricht empfängt; und

Berechnen der durchschnittlichen Einweg-Frameverzögerung gemäß folgender Formel: $Delay_{aver} = (Single-Delay_1 + Single-Delay_2 + ... Single-Delay_n)$ ÷ n, wobei $Delay_{aver}$ die durchschnittliche Einweg-Frameverzögerung darstellt, und $Single-Delay_1$, ..., $Single-Delay_n$ jede erhaltene Einweg-Frameverzögerung darstellt.

4. Verfahren zum Ausführen einer Taktsynchronisation zwischen Vorrichtungen nach Anspruch 3, wobei der Schritt D Folgendes umfasst:

Berechnen des Zeitkorrekturwertes gemäß folgender Formel: Minus = $RxTimeb_{aver}$ - ($TxTimeStampb_{aver}$ + $Delay_{aver}$), wobei Minus den Zeitkorrekturwert darstellt, $RxTimeb_{aver}$ den Durchschnittswert der Zeit darstellt, wann das Heimat-Ende eine Antwortnachricht empfängt, $TxTimeStampb_{aver}$ den Durchschnittswert der Zeit darstellt, wann das entgegengesetzte Ende eine Antwortnachricht sendet, und $Delay_{aver}$ die durchschnittliche Einweg-Frameverzögerung darstellt.

5. Verfahren zum Ausführen einer Taktsynchronisation zwischen Vorrichtungen nach Anspruch 4, wobei der Schritt E Folgendes umfasst:

E1: Erhalten der aktuellen Ortszeit T durch das Heimat-Ende; und

E2: Korrigieren der aktuellen Ortszeit gemäß folgender Formel: Ts = T - Minus, wobei $T_S$ eine aktuelle Ortszeit nach der Korrektur darstellt, T die aktuelle Ortszeit vor der Korrektur darstellt, und Minus den Zeitkorrekturwert darstellt.

6. Verfahren zum Ausführen einer Taktsynchronisation zwischen Vorrichtungen nach Anspruch 1, das des Weiteren Folgendes umfasst: nach dem Schritt E, Initiieren einer Zweiweg-Netzwerkverzögerungsmessung am entgegengesetzten Ende, Wiederholen der Schritte B bis E, und Korrigieren einer aktuellen Ortszeit des entgegengesetzten Ende.

7. Verfahren zum Ausführen einer Taktsynchronisation zwischen Vorrichtungen nach einem der Ansprüche 1 bis 6, das des Weiteren einen Schritt zum Initiieren einer Einweg-Netzwerkverzögerungsmessung durch das Heimat-Ende umfasst, um eine Einweg-Frameverzögerung zu erhalten, nachdem die aktuelle Ortszeit des Heimat-Endes und/oder des entgegengesetzten Endes korrigiert wurde, und der Schritt Folgendes umfasst:

Senden, durch das Heimat-Ende, einer Nachricht an das entgegengesetzte Ende, wobei die Nachricht eine Zeit enthält, wann das Heimat-Ende die Nachricht sendet; und

Empfangen, durch das entgegengesetzte Ende, der Nachricht und Subtrahieren der Zeit, wann das Heimat-Ende die Nachricht sendet, von der Zeit, wann das entgegengesetzte Ende die Nachricht empfängt, um die Einweg-Frameverzögerung zu erhalten.

8. Vorrichtung zum Ausführen einer Taktsynchronisation zwischen Vorrichtungen, die Folgendes umfasst:

eine Grobsynchronisationseinheit, die dafür konfiguriert, ist eine Grobsynchronisation zwischen Takten sowohl eines Heimat-Endes als auch eines entgegengesetzten Endes unter Verwendung eines Netzwerkzeitprotokolls mit hoher Genauigkeit der Grobsynchronisation bis in den Sekundenbereich auszuführen;

eine Zweiweg-Netzwerkverzögerungsmessungseinheit, die dafür konfiguriert ist, dass das Heimat-Ende eine Zweiweg-Netzwerkverzögerungsmessung initiiert und die Zeit, wann das entgegengesetzte Ende eine Antwortnachricht sendet, die Zeit, wann das Heimat-Ende eine Antwortnachricht empfängt, und eine Zweiweg-Frameverzögerung erhält, und die Hälfte der Zweiweg-Frameverzögerung als eine Einweg-Frameverzögerung zu verwenden;

eine Durchschnittswerterhaltseinheit, die ist dafür konfiguriert, einen Durchschnittswert der Zeit, wann das entgegengesetzte Ende eine Antwortnachricht sendet, einen Durchschnittswert der Zeit, wann das Heimat-Ende eine Antwortnachricht empfängt, und eine durchschnittliche Einweg-Frameverzögerung gemäß mehreren erhaltenen Zeiten, wann das entgegengesetzte Ende eine Antwortnachricht sendet, mehreren erhaltenen Zei-ten, wann das Heimat-Ende eine Antwortnachricht empfängt, und mehreren erhaltenen Einweg-Frameverzögerungen zu erhalten;

eine Zeitkorrekturwerterhaltseinheit, die dafür konfiguriert ist, den Durchschnittswert der Zeit, wann das Heimat-Ende eine Antwortnachricht empfängt, von der Summe des Durchschnittswertes der Zeit, wann das entgegengesetzte Ende eine Antwortnachricht sendet, und der durchschnittlichen Einweg-Frameverzögerung zu subtrahieren, um einen Zeitkorrekturwert zu erhalten; und

eine Korrektureinheit, die dafür konfiguriert ist, dass das Heimat-Ende eine aktuelle Ortszeit erhält und die aktuelle Ortszeit gemäß dem Zeitkorrekturwert korrigiert.

9. Vorrichtung zum Ausführen einer Taktsynchronisation zwischen Vorrichtungen nach Anspruch 8, die des Weiteren Folgendes umfasst:

eine Einweg-Netzwerkverzögerungsmessungseinheit, die dafür konfiguriert ist, dass das Heimat-Ende eine Einweg-Netzwerkverzögerungsmessung initiiert, um die Einweg-Frameverzögerung zu erhalten, nachdem die aktuelle Ortszeit des Heimat-Endes und/oder des entgegengesetzten Endes korrigiert wurde.

## Revendications

1. Procédé d'exécution d'une synchronisation d'horloge parmi des dispositifs, comprenant les étapes suivantes :

A : l'exécution d'une synchronisation approximative entre des horloges d'une extrémité de rattachement et d'une extrémité opposée par l'utilisation d'un protocole de temps de réseau, avec une grande précision de la synchronisation approximative jusqu'à l'échelle des secondes ;

B : le lancement, par l'extrémité de rattachement, d'une mesure de retard de réseau bidirectionnel, et l'obtention d'un temps auquel l'extrémité opposée transmet un message de réponse, d'un temps auquel l'extrémité de rattachement reçoit un message de réponse et d'un retard de trame bidirectionnel, et l'utilisation d'une moitié du retard de trame bidirectionnel en tant que retard de trame unidirectionnel ;

C : la répétition de l'étape B pour des temps prédéterminés, et l'obtention d'une valeur moyenne du temps auquel l'extrémité opposée transmet un message de réponse, d'une valeur moyenne du temps auquel l'extrémité de rattachement reçoit un message de réponse et d'un retard de trame unidirectionnel moyen en fonction des multiples temps obtenus auxquels l'extrémité opposée transmet un message de réponse, des multiples temps obtenus auxquels l'extrémité de rattachement reçoit un message de réponse et des multiples retards de trame unidirectionnels obtenus ;

D : la soustraction de la valeur moyenne du temps auquel l'extrémité de rattachement reçoit un message de réponse à la somme de la valeur moyenne du temps auquel l'extrémité opposée transmet un message de réponse et du retard de trame unidirectionnel moyen, pour obtenir une valeur de correction de temps ; et

E : l'obtention d'un temps actuel local et la correction du temps actuel local en fonction de la valeur de correction de temps par l'extrémité de rattachement.

2. Procédé d'exécution d'une synchronisation d'horloge parmi des dispositifs selon la revendication 1, dans lequel l'étape B comprend :

B1 : la transmission, par l'extrémité de rattachement, d'un message à l'extrémité opposée, le message comprenant un temps auquel l'extrémité de rattachement transmet le message ;

B2 : le retour, par l'extrémité opposée, d'un message de réponse à l'extrémité de rattachement, le message de réponse comprenant le temps auquel l'extrémité de rattachement transmet le message, un temps auquel l'extrémité opposée reçoit le message en provenance de l'extrémité de rattachement et un temps auquel l'extrémité opposée transmet le message de réponse ;

B3 : la réception, par l'extrémité de rattachement, du message de réponse, le calcul du retard de trame bidirectionnel selon la formule suivante : Dual-Delay = (RxTimeb - TxTimeStampf) - (TxTimeStampb - RxTimeStampf), où Dual-Delay représente le retard de trame bidirectionnel, RxTimeb représente le temps auquel l'extrémité de rattachement reçoit un message de réponse, TxTimeStampf représente le temps auquel l'extrémité de rattachement transmet un message, TxTimeStampb représente le temps auquel l'extrémité opposée transmet un message de réponse, et RxTimeStampf représente le temps auquel l'extrémité opposée reçoit un message de l'extrémité de rattachement ; et

B4 : le calcul du retard de trame unidirectionnel selon la formule suivante : Single-Delay = Dual-Delay ÷ 2, où Single-Delay représente le retard de trame unidirectionnel, et Dual-Delay représente le retard de trame bidirectionnel.

3. Procédé d'exécution d'une synchronisation d'horloge parmi des dispositifs selon la revendication 2, dans lequel l'étape C comprend :

C1 : la répétition de l'étape B pour n-1 temps et l'exécution de mesures de retard de réseau bidirectionnel pour n temps au total, où n représente les temps prédéterminés ; et

C2 : le calcul de la valeur moyenne du temps auquel l'extrémité opposée transmet un message de réponse selon la formule suivante : $TxTimeStampb_{aver} = (TxTimeStampb_1 + TxTimeStampb_2 + TxTimeStampb_n) \div n$, où $TxTimeStampb_{aver}$ représente la valeur moyenne du temps auquel l'extrémité opposée transmet un message de réponse, et $TxTimeStampb_1$, ..., $TxTimeStampb_n$ représente chaque temps obtenu auquel l'extrémité opposée transmet un message de réponse ;

le calcul de la valeur moyenne du temps auquel l'extrémité de rattachement reçoit un message de réponse selon la formule suivante : $RxTimeb_{aver} = (RxTimeb_1 + RxTimeb_2 + RxTimeb_n) \div n$, où $RxTimeb_{aver}$ représente la valeur moyenne du temps auquel l'extrémité de rattachement reçoit un message de réponse, et $RxTimeb_1$, ..., $RxTimeb_n$ représente chaque temps obtenu auquel l'extrémité de rattachement reçoit un message de réponse ; et

le calcul du retard de trame unidirectionnel moyen selon la formule suivante : $Delay_{aver} = (Single\text{-}Delay_1 + Single\text{-}Delay_2 + ... Single\text{-}Delay_n) \div n$, où $Delay_{aver}$ représente le retard de trame unidirectionnel moyen et $Single\text{-}Delay_1 + ... Single\text{-}Delay_n$ représente chaque retard de trame unidirectionnel obtenu.

4. Procédé d'exécution d'une synchronisation d'horloge parmi des dispositifs selon la revendication 3, dans lequel l'étape D comprend :
le calcul de la valeur de correction de temps selon la formule suivante :

$$Minus = RxTimeb_{aver} - (TxTimeStampb_{aver} + Delay_{aver}),$$

où Minus représente la valeur de correction de temps, $RxTimeb_{aver}$ représente la valeur moyenne du temps auquel l'extrémité de rattachement reçoit un message de réponse, $TxTimeStampb_{aver}$ représente la valeur moyenne du temps auquel l'extrémité opposée transmet un message de réponse, et $Delay_{aver}$ représente le retard de trame unidirectionnel moyen.

5. Procédé d'exécution d'une synchronisation d'horloge parmi des dispositifs selon la revendication 4, dans lequel l'étape E comprend :

E1 : l'obtention du temps actuel local T par l'extrémité de rattachement ; et

E2 : la correction du temps actuel local selon la formule suivante : $T_s = T - Minus$, où $T_s$ représente le temps actuel local après une correction, T représente le temps actuel local avant une correction, et Minus représente la valeur de correction de temps.

6. Procédé d'exécution d'une synchronisation d'horloge parmi des dispositifs selon la revendication 1, comprenant en outre : après l'étape E, le lancement d'une mesure de retard de réseau bidirectionnel à l'extrémité opposée, la répétition des étapes B à E et la correction du temps actuel local de l'extrémité opposée.

7. Procédé d'exécution d'une synchronisation d'horloge parmi des dispositifs selon l'une quelconque des revendications 1 à 6, comprenant en outre une étape du lancement d'une mesure de retard de réseau unidirectionnel par l'extrémité de rattachement pour obtenir un retard de trame unidirectionnel, après qu'un temps actuel local de l'extrémité de rattachement et/ou de l'extrémité opposée soit corrigé, et l'étape comprenant :

la transmission, par l'extrémité de rattachement, d'un message à l'extrémité opposée, le message comprenant un temps auquel l'extrémité de rattachement transmet le message ; et

la réception, par l'extrémité opposée, du message, et la soustraction du temps auquel l'extrémité de rattachement transmet le message au temps auquel l'extrémité opposée reçoit le message pour obtenir le retard de trame unidirectionnel.

8. Appareil d'exécution d'une synchronisation d'horloge parmi des dispositifs, comprenant :

une unité de synchronisation approximative configurée pour effectuer l'exécution d'une synchronisation approximative entre des horloges d'une extrémité de rattachement et d'une extrémité opposée par l'utilisation d'un protocole de temps de réseau, avec une grande précision de la synchronisation approximative jusqu'à l'échelle des secondes ;

une unité de mesure de retard de réseau bidirectionnel configurée pour effectuer, pour l'extrémité de rattachement, le lancement d'une mesure de retard de réseau bidirectionnel, et l'obtention d'un temps auquel l'extrémité opposée transmet un message de réponse, d'un temps auquel l'extrémité de rattachement reçoit un message de réponse et d'un retard de trame bidirectionnel, et l'utilisation d'une moitié du retard de trame bidirectionnel en tant que retard de trame unidirectionnel ;

une unité d'obtention de valeur moyenne configurée pour effectuer l'obtention d'une valeur moyenne du temps auquel l'extrémité opposée transmet un message de réponse, d'une valeur moyenne du temps auquel l'extrémité de rattachement reçoit un message de réponse et d'un retard de trame unidirectionnel moyen en fonction des multiples temps obtenus auxquels l'extrémité opposée transmet un message de réponse, des multiples temps obtenus auxquels l'extrémité de rattachement reçoit un message de réponse et des multiples retards de trame unidirectionnels obtenus ;

une unité d'obtention de valeur de correction de temps configurée pour effectuer la soustraction de la valeur moyenne du temps auquel l'extrémité de rattachement reçoit un message de réponse à la somme de la valeur moyenne du temps auquel l'extrémité opposée transmet un message de réponse et du retard de trame unidirectionnel moyen, pour obtenir une valeur de correction de temps ; et

une unité de correction configurée pour effectuer, pour l'extrémité de rattachement, l'obtention d'un temps actuel local et la correction du temps actuel local en fonction de la valeur de correction de temps.

9. Appareil d'exécution d'une synchronisation d'horloge parmi des dispositifs selon la revendication 8, comprenant en outre :

une unité de mesure de retard de réseau unidirectionnel configurée pour effectuer, pour l'extrémité de rattachement, le lancement d'une mesure de retard de réseau unidirectionnel pour obtenir le retard de trame unidirectionnel après la correction du temps actuel local de l'extrémité de rattachement et/ou de l'extrémité opposée.

Fig. 1

| Home end |
|---|

Request frame

Reply frame

| Opposite end |
|---|

| TxTimeStampf |
|---|
|  |
|  |
|  |

| TxTimeStampf |
|---|
| RxTimeStampf |
|  |
|  |

| TxTimeStampf |
|---|
| RxTimeStamp |
| TxTimeStampb |
| RxTimeb |

| TxTimeStampf |
|---|
| RxTimeStamp |
| TxTimeStampb |
|  |

Fig. 2

| Home end | Request frame | Opposite end |
| --- | --- | --- |

| TxTimeStampf | ⟹ | TxTimeStampf |
| | | RxTimeStampf |

Fig. 3

A coarse synchronization is performed between clocks of both a home end and an opposite end by using a network time protocol
s301

The home end initiates a two-way network delay measurement, and obtains the time when the opposite end transmits a response message, the time when the home end receives a response message and a two-way frame delay, and uses half of the two-way frame delay as a one-way frame delay
s302

s302 is repeated for predetermined times, and an average value of the time when the opposite end transmits a response message, an average value of the time when the home end receives a response message and an average one-way frame delay are obtained according to the multiple obtained time when the opposite end transmits a response message, multiple obtained time when the home end receives a response message and multiple obtained one-way frame delays
s303

The sum of the average value of the time when the opposite end transmits a response message and the average one-way frame delay is subtracted by the average value of the time when the home end receives a response message, to obtain a time correction value
s304

The home end obtains local current time, and corrects the local current time according to the time correction value
s305

A two-way network delay measurement is initiated at the opposite end, s302 to s305 are repeated, and the local current time of the opposite end is corrected
s306

Fig. 4

| Coarse synchronization unit | Two-way network delay measurement unit | Average value obtaining unit | Time correction value obtaining unit | Correction unit | One-way network delay measurement unit |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1209850 A